# EUROPEAN PATENT APPLICATION

(11) **EP 3 546 821 A1**
(43) Date of publication of application: **02.10.2019**
(21) Application number: 18382224.6
(22) Date of filing: 29.03.2018
(51) Int. Cl.: F21S 41/176, F21S 43/16, F21S 41/19, F21S 41/40, F21S 43/19, B60Q 1/04, B60Q 1/26, B60Q 1/00, B60Q 1/34, F21S 41/20

(54) **LIGHTING DEVICE**

(71) Applicant: Valeo Iluminacion, 23600 Martos (ES)
(72) Inventor: SANTAELLA, Juan-Jose, 23600 MARTOS (ES); MARIN, Maria, 23600 MARTOS (ES); MARTINEZ-PEREZ, Jose-Ramon, 23600 MARTOS (ES); ILLAN, Antonio Domingo, 23600 MARTOS (ES); LARA-CABEZA, Juan, 23600 MARTOS (ES); PENA, Miguel-Angel, 23600 MARTOS (ES); BARRAGAN, Mari-Angeles, 23600 MARTOS (ES)
(74) Representative: Valeo Vision

(57) **Abstract**

The invention is related to a lighting device (1) for an automotive vehicle. This lighting device (1) comprises a light source (2) configured to emit light beams (20), a diaphragm element (3) arranged to receive such light beams (20) and a substrate (4, 5). The substrate (4, 5) comprises quantum dots (40) and is located to receive light beams (20) after they have reached the diaphragm element (3).

## Description

### TECHNICAL FIELD

This invention is related to the field of automotive lighting devices.

### STATE OF THE ART

An automotive lighting device comprises a light source, so that the lighting device may provide some light, either for lighting and/or signalling. Several types of light sources families are used nowadays, all of them having advantages and disadvantages.

Semiconductor light sources, such as Light Emitting Diodes (LEDs) or laser light sources have been used due to their efficiency and have a great improvement margin. They are increasingly adapting to the whole range of functions required by automotive lighting devices, due to their high versatility and the combination with other optical elements, such as collimators, light guides, diaphragms and lenses.

The manufacturing of a semiconductor light source is neither very expensive nor complicated, but has some drawbacks, due to the unavoidable unrepeatability in the final product. Further, they require a very precise location and are sensible to the operation temperature.

This invention is related to an alternative way of providing lighting in an automotive vehicle.

### DESCRIPTION OF THE INVENTION

The invention provides a solution for this problem by means of a lighting device according to claim 1. Preferred embodiments of the invention are defined in dependent claims.

In an inventive aspect, the invention provides a lighting device for an automotive vehicle, the lighting device comprising
a light source configured to emit light beams;
a diaphragm element arranged to receive light beams;
a substrate comprising quantum dots, the substrate being located to receive light beams after they have reached the diaphragm element.

A quantum dot is an electronic structure obtained out of a semiconductor nanocrystal, with a size such that their electrons and holes are confined in all three spatial dimensions. Depending on the particular sizes of the quantum dots, they emit light in a particular wavelength (bandgap) when they are excited, either electrically or luminescently. As a consequence, "red" quantum dots would be quantum dots which emit light in the red bandgap when excited, "green" quantum dots would be quantum dots which emit light in the green bandgap when excited, etc. However, when they are not excited, they may not be visible. This is because quantum dots are deposited in a nanometric layer using a thin film deposition technology. By controlling the amount and density of the quantum dots, this layer is not visible when not excited either by an electric or by a luminescent stimulator.

The diaphragm element does not need to be an opaque element, but just adapted for reflecting at least part of the light beams coming from the light source.

These quantum dots are an advantageous solution since they provide flexibility in the design of the automotive lighting devices, allowing new ways of designing the different functionalities of a lighting device: lighting, indicating, signalling.

In some particular embodiments, the light source is adapted to create a light cone, both the diaphragm element and the substrate being comprised within the light cone.

The light cone provides a controlled environment where light is emitted, allowing the best positioning of the diaphragm element and the substrate.

In some particular embodiments, the light source is configured to emit light beams in a first wavelength and the substrate comprises quantum dots configured to reemit light in a second wavelength greater than the first wavelength.

With this arrangement, light is emitted in a first wavelength, instead of a mixture of different wavelengths such as a white light. After passing through the diaphragm element, it may be diffracted, but due to the fact that the source light is emitted in a single wavelength, the resulting beam pattern is not an uncontrolled mixture of different colours. The substrate with quantum dots modifies the colour of this resulting beam pattern so that it complies with the automotive regulations of the specific functionality. In some particular embodiments, the light source is a blue semiconductor light source and the substrate comprises red and green quantum dots so that the final beam pattern is a white light.

In some particular embodiments, the substrate is a quantum dot film. These films are thin flexible sheets where quantum dots are applied, allowing a great flexibility in the design.

In some particular embodiments, the lighting device further comprises an optical element configured to project light emitted by the light source, the optical element being located to receive light beams after they have reached the diaphragm element.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements which are useful for transforming the light beams emitted by the light source into an acceptable light pattern for the functionality chosen for the lighting device.

In some particular embodiments, at least part of the substrate covers at least part of the optical element. In this case, some room is saved, since the substrate is directly applied on the optical element. Advantages of this invention are achieved without using room for an additional element.

In some particular embodiments, at least part of the optical element is the substrate where quantum dots are deposited. Although these embodiments may result a little more expensive to manufacture, it results in a cleaner way of embodying this invention, and may be preferred if a more steady manufacturing process is required.

In some particular embodiments, at least part of the substrate is located between the optical element and the diaphragm element. In this case, the separate substrate sheet may be adjusted depending on the functionalities of the lighting device. In some particular embodiments, the optical element is located to receive light beams after they have reached the substrate.

In a further inventive aspect, the invention provides a lighting device for an automotive vehicle according to the previous inventive aspect, the lighting device being a headlamp.

In a further inventive aspect, the invention provides a lighting device for an automotive vehicle, the lighting device comprising
a stimulator for quantum dots; and
a substrate comprising quantum dot structures;
wherein at least one of the quantum dot structures have a core and a shell.

A quantum dot is an electronic structure obtained out of a semiconductor nanocrystal, with a size such that their electrons and holes are confined in all three spatial dimensions. Depending on the particular sizes of the quantum dots, they emit light in a particular wavelength (bandgap) when they are excited, either electrically or luminescently. As a consequence, "red" quantum dots would be quantum dots which emit light in the red bandgap when excited, "green" quantum dots would be quantum dots which emit light in the green bandgap when excited, etc. However, when they are not excited, they may not be visible. This is because quantum dots are deposited in a nanometric layer using a thin film deposition technology. By controlling the amount and density of the quantum dots, this layer is not visible when not excited either by an electric or by a luminescent stimulator.

These quantum dots are an advantageous solution since they provide flexibility in the design of the automotive lighting devices, allowing new ways of designing the different functionalities of a lighting device: lighting, indicating, signalling.

In this inventive aspect, each quantum dot structure comprises a core and a shell. The quantum dot acts as the core and is covered with a shell that acts as a passivation element for the core, to increase the quantum confinement and therefore reduce the number of dangling bonds which causes a low value in the QY (quantum yield) parameter.

In some particular embodiments, the stimulator is a light source. In some embodiments, the stimulator is an electrical power source. Since quantum dots may be excited either by luminescent energy or by electric energy, the manufacturer may choose between these types of stimulators. Each of them provides specific advantages and is preferred in particular scenarios.

In some particular embodiments, the core is spherical or pyramidal. This core structures are the most suitable for lighting applications, since they provide better light properties.

In some particular embodiments, the core does not comprise Cd, Pb or Hg. The absence of heavy metals makes this device environmentally friendly.

In some particular embodiments, the core comprises at least one of In, P, Zn, Se, Cu, S, Mn and the shell comprises at least one of Zn, Se and S. These materials have been proven to be suitable for this application.

In some particular embodiments, the lighting device further comprises an optical element.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements which are useful for transforming the light beams emitted by the light source into an acceptable light pattern for the functionality chosen for the lighting device.

In some particular embodiments, the lighting device is a signalling device or a headlamp.

In a further inventive aspect, the invention provides a method of manufacturing a lighting device according to any of the preceding claims, the method comprising the steps of
determining a first colour BIN suitable for the operation of the lighting device;
selecting a first quantum dot size suitable for matching the first colour BIN
using quantum dot structures with the first quantum dot size and comprising a core and a shell in the lighting device.

This method allows the use of specifically designed core-shell quantum dot structures for particular functionalities of an automotive lighting device.

In some particular embodiments, the method further comprises the steps of
determining a second colour BIN suitable for the operation of the lighting device;
selecting a second quantum dot size suitable for matching the second colour BIN
using quantum dot structures with the second quantum dot size and comprising a core and a shell in the lighting device.

This particular embodiment is useful when more than one colour is needed for a specific functionality.

In a further inventive aspect, the invention provides a lighting device for an automotive vehicle, the lighting device comprising
a plurality of stimulators for quantum dots;
a plurality of substrate regions, each substrate region comprising quantum dots; wherein each substrate region is fed by one of the stimulators, in such a way that the quantum dots comprised in each region may be stimulated independently.

A quantum dot is an electronic structure obtained out of a semiconductor nanocrystal, with a size such that their electrons and holes are confined in all three spatial dimensions.

Depending on the particular sizes of the quantum dots, they emit light in a particular wavelength (bandgap) when they are excited, either electrically or luminescently. As a consequence, "red" quantum dots would be quantum dots which emit light in the red bandgap when excited, "green" quantum dots would be quantum dots which emit light in the green bandgap when excited, etc. However, when they are not excited, they may not be visible. This is because quantum dots are deposited in a nanometric layer using a thin film deposition technology. By controlling the amount and density of the quantum dots, this layer is not visible when not excited either by an electric or by a luminescent stimulator.

These quantum dots are an advantageous solution since they provide flexibility in the design of the automotive lighting devices, allowing new ways of designing the different functionalities of a lighting device: lighting, indicating, signalling.

The fact that a plurality of independently stimulated regions may be included in a lighting device offers a wide range of possibilities. Quantum dots lighting devices provide a flexible way of designing the light pattern and functionalities of said devices, since a simple support is the only element needed to include a light source in a lighting device.

In some particular embodiments, at least some of the substrate regions are part of a substrate.

A substrate with two or more regions which may be stimulated independently provides a new way of achieving controlled activation of light segments, with the additional advantage that the geometry of these regions may be designed easily, not being limited by the particular shape of the traditional optical elements and their light patterns.

In some particular embodiments, at least some of the substrate regions are comprised in different substrates arranged in a stack configuration.

Different applications are found for these embodiments, where the same space may be used to provide different lighting functionalities, when no simultaneity is required. When the substrate regions are arranged in a stack configuration, one of more substrate regions may be selectively activated, thus creating a wide range of possible combinations for the same space.

In some particular embodiments, at least one stimulator is a light source. In some particular embodiments, at least one stimulator is an electrical power source. In some particular embodiments, at least one stimulator is a pair of electrodes, and more specifically, the electrodes are made of an indium-tin oxide or of an indium zinc oxide. Since quantum dots may be excited either by luminescent energy or by electric energy, the manufacturer may choose between these types of stimulators. Each of them provides specific advantages and is preferred in particular scenarios. Indium-tin oxide and indium-zinc oxide are substantially transparent, so they contribute to a clearer design of the lighting device.

In some particular embodiments, the stimulators are controlled by a controller. A controller may be a software-based controller or a hardware-based controller, and provides the possibility of controlling the activation of each substrate region. In some cases, this would allow an animated activation of, e. g., a turning indicator. In other cases, an alternative activation between, e. g., a daily running light (DRL) and the turning indicator.

In some particular embodiments, the quantum dots are colloidal quantum dots, comprising solid quantum dots submerged in a liquid solution.

This is an alternative way of providing the quantum dots, which may be especially suitable for some applications.

In some particular embodiments, at least some of the substrate regions have a luminous transmittance higher than 60% according to UNE-EN ISO 13468-2:2006 with standard illuminant D65. This means that the substrate regions are transparent enough for emitting light despite being arranged in a stack configuration.

In some particular arrangements, the substrate is flexible. In this document, the fact that an element is "flexible" should be understood as the property of this element of bending to make contact between opposite ends of this element without suffering a plastic deformation. The person skilled in the art knows this concept and would perfectly identify a "flexible" substrate from a rigid substrate. A flexible substrate is suitable for adapting to a particular contour of a lighting device, while a rigid substrate is not.

In some particular embodiments, the substrate is made of poly-ethylene naphtalate or poly-ethylene therephtalate. These materials have proven to be suitable for this application, due to their mechanical properties.

In some particular embodiments, the lighting device further comprises an optical element.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements which are useful for transforming the light beams emitted by the light source into an acceptable light pattern for the functionality chosen for the lighting device.

In some particular embodiments, the lighting device is a tail lamp or a turning indicator.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a lighting device according to the invention.
Figures 2a to 2c show different embodiments of lighting devices according to the invention.
Figure 3 shows a lighting device according to the invention installed in an automotive vehicle.
Figure 4 shows a different embodiment of a lighting device according to the invention.
Figure 5 shows some elements of the lighting device of Figure 4.
Figure 6 shows a lighting device according to the invention installed in an automotive vehicle.
Figure 7 shows a different embodiment of a lighting device according to the invention.
Figure 8 shows a different embodiment of a lighting device according to the invention.
Figure 9 shows a different embodiment of a lighting device according to the invention.
Figure 10 shows a lighting device according to the invention installed in an automotive vehicle.

### DETAILED DESCRIPTION OF THE INVENTION

### Embodiment 1

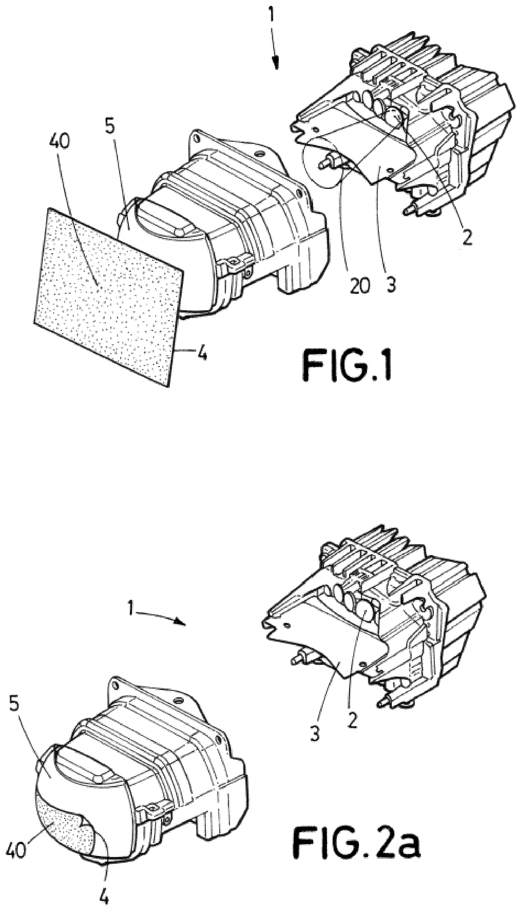

Figure 1 shows a lighting device 1 according to the invention.

Such a lighting device 1 comprises
a light source 2 configured to emit light beams 20;
a diaphragm element 3 arranged to receive light beams 20;
a substrate 4 comprising quantum dots 40, the substrate being located to receive light beams 20 after they have reached the diaphragm element 3, and
a lens 5.

The light source 2 is configured to emit light beams 20, since the lighting device 1 is intended to provide a lighting functionality in the automotive vehicle. The diaphragm element 3 is intended to limit the light pattern created by the light source 2, providing a limit or a cut-off for this pattern. In this case, this light pattern is a light cone. However, this diaphragm element 3 also causes diffraction in this light pattern. In this particular embodiment, the light source 2 emits in a blue wavelength (could be deep blue or violet) and the diffraction does not cause a rainbow effect, but this blue light is not usually useful for automotive functionalities. On one side, the rainbow effect has been avoided, but on the other side, the resulting light pattern cannot be used according to current regulations.

In this particular embodiment, the lighting device is used as a headlamp, and the lens 5 projects the received light pattern so that it may be used in this kind of automotive applications.

The substrate 4 comprising quantum dots 40 provides colour balancing for this blue light, so that a more useful final light pattern is obtained. In this case, the provision of red and green quantum dots provides a result of a white light, which may be used in a wide range of automotive applications.

Regarding the relative position of the substrate, there are many possibilities, as shown by Figures 2a to 2c.

Figure 2a shows a first option, where the substrate is a quantum dot film 4 and covers part of the lens 5. In different embodiments, the total surface of the lens may be covered by the substrate, if necessary.

In this embodiment, there is no need to provide an extra location for the substrate 4, since it is somehow fixed to the lens 5, either by an adhesive or by any other attaching means.

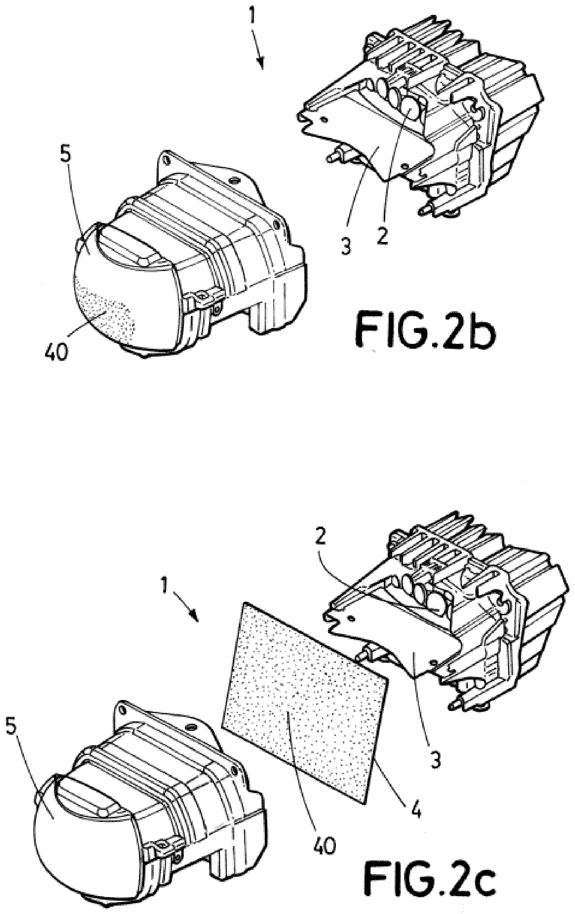

Figure 2b shows a second option, where the lens 5 itself is the substrate. This is obviously within the scope of the invention, since the substrate may be any element of a lighting device 1 where quantum dots 40 may be deposited. In this case, there is no need of a further step of fixing the substrate to the lens, but the step of depositing the quantum dots 40 in the lens 5 may be a little more complicated than in the embodiment shown in Figure 2a, where the quantum dots were deposited on a flexible sheet. This embodiment is more reliable, since no problem may arise regarding the attachment between the substrate and the lens.

Figure 2c shows a third option, where the substrate is a thin film 4 located between the diaphragm element 3 and the lens 5. In this case, the thin film would require a further support, but it has the advantage that it may be easily adjusted or replaced.

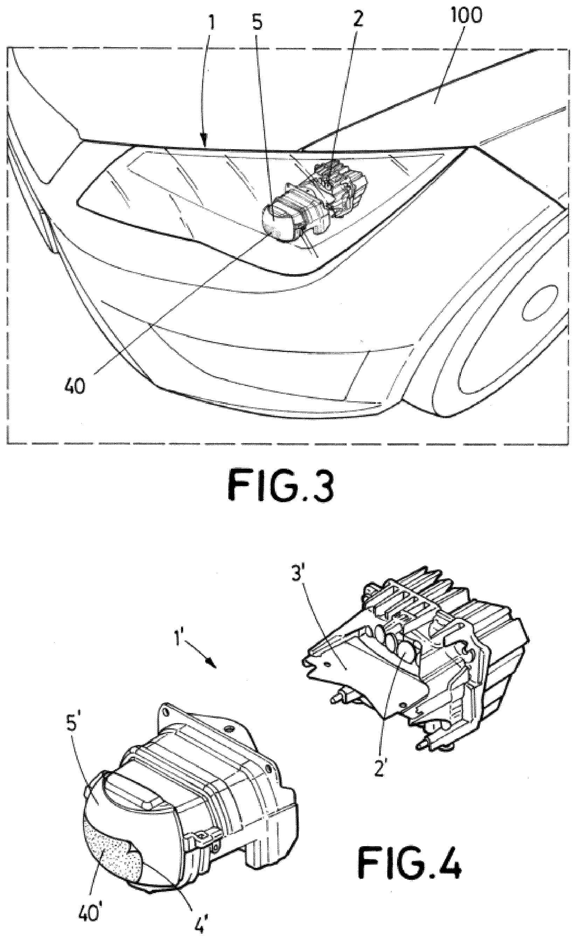

Figure 3 shows a lighting device 1 according to the invention installed in an automotive vehicle 100. In this case, the lighting device 1 is a headlamp and the design is the one shown in Figure 2b, which is suitable for this type of devices.

### Embodiment 2

Figure 4 shows a lighting device 1' for an automotive vehicle, the lighting device 1' comprising a diaphragm element 3', a substrate 4' comprising quantum dot structures 40', a stimulator 2' for quantum dots and a lens 5'. In this particular embodiment, the stimulator is a light source, although in other embodiments, the stimulator may be an electrical power source. Since quantum dots may be excited either by luminescent energy or by electric energy, the manufacturer may choose between these types of stimulators. Each of them provides specific advantages and is preferred in particular scenarios. Stimulation by light may be preferred when a colour change is required, the luminous power being provided by the stimulator light source. Electric stimulation may be preferred when a great luminous power is not required, but room requirements are more severe.

In the manufacturing of this lighting device, some steps have been carried out. First, a first colour BIN suitable for the operation of the lighting device has been determined. Then, a first quantum dot size suitable for matching this first colour BIN is selected. Finally, quantum dot structures with the first quantum dot size and comprising a core and a shell are included in the lighting device. According to this method, specifically designed core-shell quantum dot structures may be used for particular functionalities of an automotive lighting device.

In some particular embodiments, the steps of this method may be repeated if more than one colour is needed for a specific functionality.

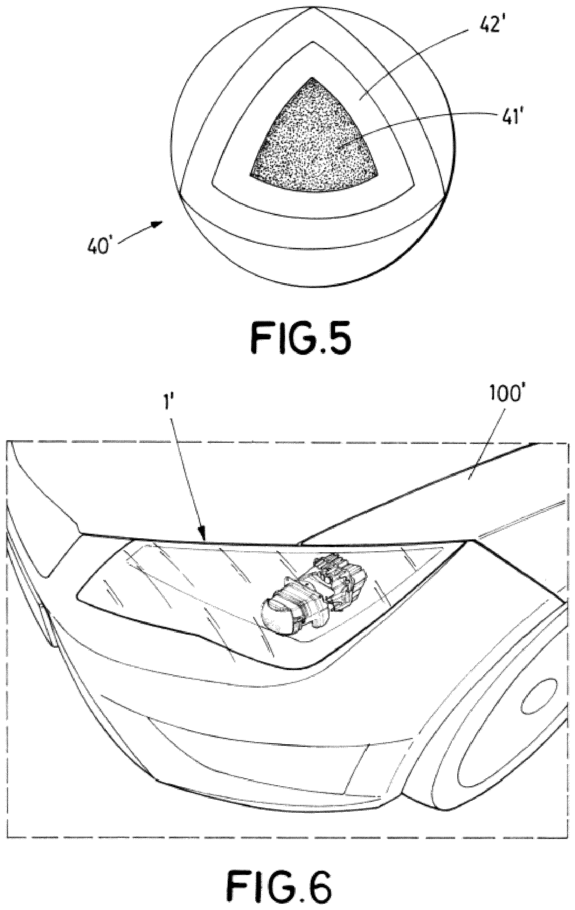

Figure 5 shows one of these quantum dot structures 40'. In this case, each one of the quantum dot structures has a core 41' and a shell 42'. The shell 42' acts as a passivation element for the core 41', thus increasing the quantum confinement in this core 41'. An important parameter in the operation of these quantum dot structures 40' is the quantum yield (QY) parameter. This parameter measures the efficiency of the quantum dot structure as a light emission element. A shield helps to reduce the number of dangling bonds, which are one of the causes of a low value in the QY parameter.

As may be seen in this figure, the core is spherical, although in different embodiments, some of the cores are pyramidal. This core structures are the most suitable for lighting applications, since they provide better light properties. In this case, the core comprises In and P and the shell comprises Zn and S. However, in different embodiments, the core comprises at least one of In, P, Zn, Se, Cu, S, Mn and the shell comprises at least one of Zn, Se and S. These materials have been proven to be suitable for this application.

Figure 6 shows a lighting device 1' according to the invention installed in an automotive vehicle 100'. In this case, the lighting device 1' is a headlamp and the design is the one shown in Figure 2b, which is suitable for this type of devices.

### Embodiment 3

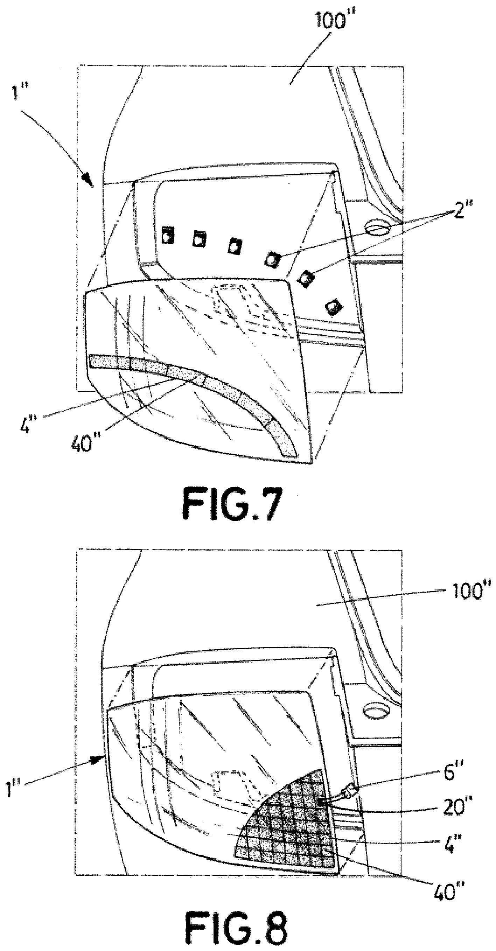

Figure 7 shows a lighting device 1" for an automotive vehicle, this lighting device 1" comprising
a plurality of substrate regions 4", each substrate region comprising quantum dots 40"; and
a plurality of light sources 2" which are arranged to stimulate the quantum dots 40", each light source 2" being arrange to stimulate the quantum dots 40" of one of the substrate regions 4".

According to this embodiment, the quantum dots comprised in each region may be stimulated independently.

In the embodiment shown in this figure, the substrate regions 4" are part of the same substrate or at least are arranged in such a way that the substrate regions 4" are not overlapped. In this case, a substrate comprises four substrate regions 4". This allows a new way of achieving controlled activation of light segments, with the additional advantage that the geometry of these regions may be designed easily, not being limited by the particular shape of the traditional optical elements and their light patterns. On the contrary, quantum dots may be deposited in a sheet with a complex shape, without the quality of the light emission being affected.

As may be shown in this figure, light sources 2" are located in a row, and each light source stimulates one substrate region 4". As a consequence, a sequential activation of a turning indicator may be achieved with standard light sources, but obtaining a result which is completely different from the result obtained if these standard light sources were the only elements in charge of producing signalling.

In this case, the quantum dots are colloidal quantum dots, comprising solid quantum dots submerged in a liquid solution.

Figure 8 shows another example of this type of lighting devices. In this case, the substrate regions 4" are stimulated by electric power. The substrate regions 4" are not arranged linearly, but in an arrangement which is similar to a matrix. Depending on the stimulation schedule, different animations may be obtained, due to the possibilities of a matrix arrangement. Further, in this case there is no need that all the matrix dots have the same shape, since in the device of the invention, the shape is only limited by the shape of the substrate where the quantum dots are deposited. Since the substrate may be as simple as a plastic sheet, this may be shaped in a very flexible way.

In this embodiment, the stimulators are pairs of electrodes 20", instead of light sources as in the embodiment of the previous figure. More specifically, the electrodes 20" are made of an indium-tin oxide or of an indium zinc oxide. Indium-tin oxide and indium-zinc oxide are substantially transparent, so they contribute to a clearer design of the lighting device 1".

In this case, the electrodes 20" are controlled by a controller, particularly a software-based controller 6", although in other embodiments a hardware-based controller may be used. This provides the possibility of selectively controlling the activation of each substrate region 4".

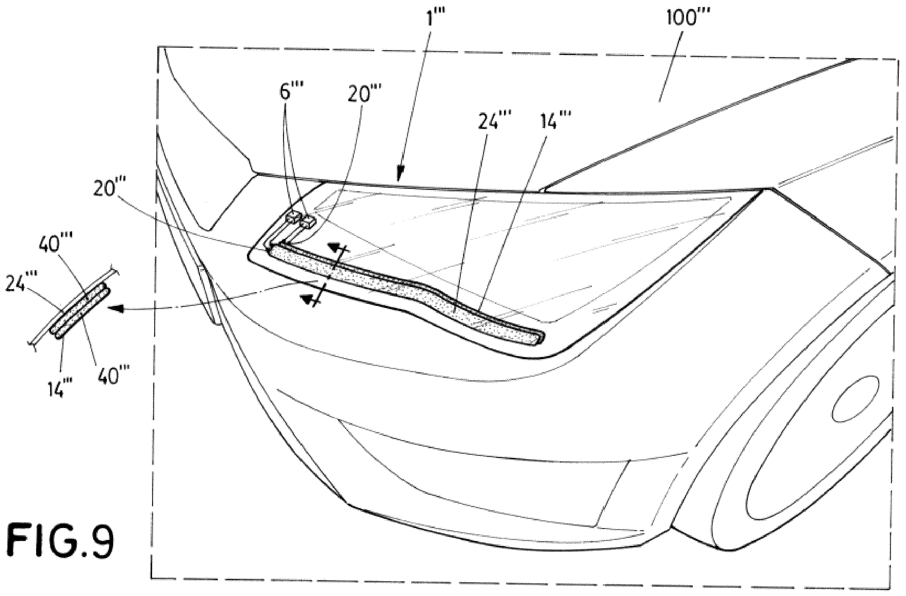

Figure 9 shows a side view of a different embodiment of a lighting device 1''' according to the invention. In this embodiment, the substrate regions 14'" and 24'" are arranged in a stack configuration, instead of being part of the same substrate, as in the embodiments of Figures 7 and 8.

In this embodiment, the stimulators are pairs of electrodes 20'''. More specifically, the electrodes 20''' are made of an indium-tin oxide or of an indium zinc oxide. Indium-tin oxide and indium-zinc oxide are substantially transparent, so they contribute to a clearer design of the lighting device 1'''. As in the embodiment of the previous figure, the electrodes 20''' are controlled by a controller, particularly a software-based controller 6''', although in other embodiments a hardware-based controller may be used.

With this arrangement, different functionalities may be operated alternatively in the same space. In the embodiment of this figure, a first substrate region 14''' configured to provide the functionality of a turning indicator and a second substrate region 24''' configured to provide the functionality of a daily running light (DRL) are stacked in the same space. Each one of these substrate regions are stimulated independently. This strategy is often used, since there is not real need to provide the turning indicator functionality and the DRL functionality at the same time: when the turning indicator is working, it acts as a DRL, so the original DRL may be not working during this process. This embodiment also allows the option of providing an alternative operation between the turning indicator and the DRL, or just switching-off the DRL when the turning indicator is working.

These substrate regions have a luminous transmittance higher than 60% according to UNE-EN ISO 13468-2:2006 with standard illuminant D65. This means that the substrate regions are transparent enough for emitting light despite being arranged in a stack configuration. This is convenient when there are two or more substrate regions, and light must pass through all of them to be visible from the outside.

The substrate regions of this embodiment are flexible, so that they may adapt to the contour of a lighting device. In this case, these are made of poly-ethylene therephtalate.

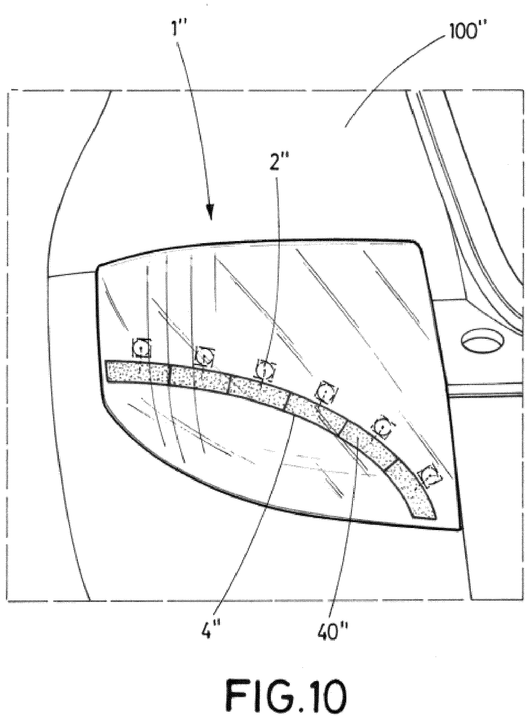

Figure 10 shows a lighting device 1''' according to the invention installed in an automotive vehicle 100'''. In this case, the lighting device 1''' provides the functionality of a turning indicator and the design is the one shown in Figure 7, which is suitable for this type of devices.

## Claims

1. Lighting device (1) for an automotive vehicle (10), the lighting device (1) comprising
a light source (2) configured to emit light beams (20);
a diaphragm element (3) arranged to receive light beams (20);
a substrate (4, 5) comprising quantum dots (40), the substrate being located to receive light beams (20) after they have reached the diaphragm element (3).

2. Lighting device (1) according to claim 1, wherein the light source (2) is adapted to create a light cone, both the diaphragm element (3) and the substrate (4, 5) being comprised within the light cone.

3. Lighting device (1) according to any of the preceding claims, wherein the light source (2) is configured to emit light beams (20) in a first wavelength and the substrate (4, 5) comprises quantum dots with at least a second wavelength greater than the first wavelength.

4. Lighting device (1) according to any of the preceding claims, wherein the light source is a blue semiconductor light source and the substrate (4, 5) comprises red and green quantum dots.

5. Lighting device according to any of the preceding claims, wherein the substrate is a quantum dot film (4).

6. Lighting device according to any of the preceding claims, further comprising an optical element (5) configured to project light emitted by the light source, the optical element being located to receive light beams after they have reached the diaphragm element.

7. Lighting device according to claim 6, wherein at least part of the substrate covers at least part of the optical element (5).

8. Lighting device according to claim 6, wherein at least part of the optical element (5) is the substrate where quantum dots are deposited.

9. Lighting device according to claim 6, wherein at least part of the substrate (4) is located between the optical element (5) and the diaphragm element (3).

10. Lighting device according to claim 6, wherein the optical element (5) is located to receive light beams after they have reached the substrate (4).

11. Lighting device (1) for an automotive vehicle (10) according to any of the preceding claims, the lighting device (1) being a headlamp.
